# EUROPÄISCHE PATENTANMELDUNG

(11) **EP 1 426 425 A1**
(43) Veröffentlichungstag der Anmeldung: **09.06.2004**
(21) Anmeldenummer: 03027773.5
(22) Anmeldetag: 03.12.2003
(51) Int. Cl.: C09G 1/10

(54) **Wachsformulierungen und deren Verwendung zur Pflege und Konservierung von Oberflächen**

(30) Priorität: 04.12.2002 DE 10256699
(71) Anmelder: BASF AG, 67056 Ludwigshafen (DE)
(72) Erfinder: Keller, Harald, 67069 Ludwigshafen (DE); Frechen, Thomas, 69123 Heidelberg (DE); Schrepp, Wolfgang, 69118 Heidelberg (DE); Ebenau, Axel, 67117 Limburgerhof (DE); Dieleman, Cedric, 67630 Scheibenhard (FR); Rosas Paz, Silvio Alejandro, 68165 Mannheim (DE)
(74) Vertreter: Pohl, Michael, Dr.

(57) **Zusammenfassung**

Die vorliegende Erfindung betrifft Wachsformulierungen, die neben einem Wachsbestandteil a) wenigstens ein hochmolekulares Isobutenpolymer b) in einer Menge von 0,1 bis 5 Gewichtsteilen, bezogen auf 1 Gewichtsteil des Bestandteils a) enthalten.

## Beschreibung

Die vorliegende Erfindung betrifft neue Wachsformulierungen, insbesondere in Form von Poliermitteln und Pflegemitteln für glatte Oberflächen, sowie die Verwendung der Wachsformulierungen zur Pflege bzw. Konservierung von glatten Oberflächen.

Aufgrund ihrer Eigenschaft, glatte und dünne Filme mit wasserabstoßenden Eigenschaften zu bilden, finden Wachse seit langem Verwendung in Mitteln zur Pflege und zur Konservierung von Oberflächen, insbesondere von lackierten Oberflächen. Sie sind daher regelmäßiger Bestandteil in Autopolituren und vergleichbaren Mitteln zur Pflege und Konservierung glatter Oberflächen. In solchen Mitteln hat sich seit langem ein Zusatz von Silikonölen wie Polydimethylsiloxanölen bewährt. Die Silikonöle wirken dabei als Gleitmittel für die Wachspartikel und erleichtern somit das Aufbringen eines gleichmäßigen dünnen Wachsfilms auf die zu pflegende/konservierende Oberfläche. Zudem verstärken die Silikonöle die wasserabweisenden Eigenschaften der so behandelten Oberfläche und bewirken einen verbesserten Glanz. Die unter Verwendung derartiger Zusammensetzungen erhaltenen Wachsfilme sind jedoch gegenüber Witterungseinflüssen und gegenüber der Einwirkung von Detergenzien empfindlich. Es hat nicht an Versuchen gefehlt, die Witterungsbeständigkeit und die Beständigkeit derartiger Wachsfilme gegenüber Detergenzien zu verbessern. So wurde verschiedentlich vorgeschlagen, an Stelle von unfunktionalisierten Polydimethylsiloxanen Amino-funktionalisierte Polydimethylsiloxane zu verwenden. Der Einsatz dieser Zusammensetzungen führt jedoch zu einem verringerten Glanz der Oberfläche.

Die DE-C 2300245 empfiehlt die Verwendung einer Mischung eines konventionellen Polydimethylsiloxans mit einem kohlenstoffreichen Organosiloxan als Silikonöl-Komponente in wachshaltigen Oberflächenpflegemitteln. Die DE-C 2936678 wiederum empfiehlt als Silikonöl-Komponente eine Mischung eines flüssigen Cyclodimethylsiloxans und eines Polydimethylsiloxans mit Polyethergruppen.

Aus der US 3,393,078 sind wachshaltige Oberflächenpflegemittel bekannt, die ein Montanwachs, ein mikrokristallines Wachs, zwei Silikonöle mit unterschiedlicher Viskosität sowie einen flüchtigen Kohlenwasserstoff enthalten.

Gemäß US 4,398,953 lässt sich die Wasserbeständigkeit der dabei erhaltenen Wachsfilme dadurch verbessern, dass man einen Kohlenwasserstoff verwendet, der sehr viel rascher als Wasser verdampft. Die Detergenzienbeständigkeit der dabei erhaltenen Wachsfilme ist jedoch nicht zufriendestellend.

Die US 4,273,584 empfiehlt, anstelle von Wachs eine komplexe Mischung aus Hydroxy-terminierten Silikonölen, Amino-funktionalisierten Polysiloxanen und gegebenenfalls partiell hydrolysierten Organotrialkylsilanen zu verwenden. Derartige Zusammensetzungen sind jedoch aufgrund der Einsatzmaterialien sehr teuer.

Keine der im Stand der Technik offenbarten Zusammensetzungen vermag bezüglich der Detergenzstabilität zu überzeugen.

Der vorliegenden Erfindung liegt somit die Aufgabe zugrunde, eine Wachsfomulierung bereitzustellen, mit der beim Auftragen auf eine Oberfläche Wachsfilme erhalten werden, die eine hohe Detergenzstabilität aufweisen. Der Glanz der dabei erhaltenen Beschichtung sollte mit dem Glanz von konventionellen Wachsbeschichtungen zumindest vergleichbar sein.

Es wurde überraschendeweise gefunden, dass diese Aufgabe durch Wachsformulierungen gelöst wird, die neben wenigstens einem Wachs als Bestandteil a) wenigstens ein hochmolekulares Isobuten-Polymer als Bestandteil b) in einer Menge von 0,1 bis 5 Gewichtsteilen, bezogen auf 1 Gewichtsteil Wachs enthalten.

Die vorliegende Erfindung betrifft somit derartige Wachsformulierungen sowie deren Verwendung zur Pflege und zur Konservierung von glatten Oberflächen, insbesondere von lackierten Oberflächen, wie man sie beispielsweise bei Automobilkarosserien vorfindet.

Unter Pflege und Konservierung versteht man den Schutz der Oberfläche gegenüber Umwelteinflüssen durch Aufbringen der erfindungsgemäßen Formulierungen, so dass sich eine dünne Wachsschicht auf der Oberfläche ausbildet. Gleichzeitig kann mit dem Aufbringen ein Reinigungseffekt und Glanzbildung einhergehen.

Unter einem hochmolekularen Isobuten-Polymeren versteht man Homopolymere des Isobutens sowie Copolymere, die überwiegend, d. h. zu mehr als 50 Gew.-% und insbesondere zu mehr als 80 Gew.-% aus Isobuten aufgebaut sind. Geeignete Comonomere in den Isobuten-Copolymeren sind üblicherweise hydrophober Natur, das heißt, sie weisen keine Aminogruppen, Säurefunktionen oder Alkoholfunktionen auf und ihre Wasserlöslichkeit liegt unterhalb 1 g/l (bei 25 °C). Beispiele für geeignete Comonomere sind monoethylenisch ungesättigte Kohlenwasserstoffe, beispielsweise von Isobuten-verschiedene 1-Olefine mit 3 bis 30 C-Atomen, z.B. Ethylen und Propylen, vinylaromatische Monomere wie Styrol und α-Methylstyrol, weiterhin halogenierte Olefine wie Tetraflourethylen, Vinylidenchlorid und Vinylchlorid, weiterhin Vinyl- und Allylether mit drei bis dreißig C-Atomen, z.B. Methylvinylether, Ethylvinylether, n-Butylvinylether, n-Octylvinylether und Octadecylvinylether, Ester der Acrylsäure und der Methacrylsäure von aliphatischen Alkoholen mit zwei bis zwanzig C-Atomen wie Ethylacrylat, n-Butylacrylat, tert.-Butylacrylat, n-Hexylacrylat, 2-Ethylhexylacrylat, Stearylacrylat und die entsprechenden Methacrylate. Bevorzugte Comonomere sind die vorgenannten monoethylenisch ungesättigten Kohlenwasserstoffe, insbesondere Styrol, Proplyen und Ethylen. In den Isobuten-Copolymeren können die Comonomere statistisch, blockartig oder kammartig verteilt sein. Besonders bevorzugt werden Isobuten-Homopolymere (Comonomeranteil < 5 Gew.-% und insbesondere < 1 Gew.-%).

Das Molekulargewicht (Viskositätsmittel Mᵥ) der hochmolekularen Isobuten-Polymere liegt in der Regel oberhalb 100000 Dalton, insbesondere oberhalb 500000 Dalton und speziell oberhalb 1000000 Dalton und wird häufig bis zu 10000000 betragen. Das hier angegeben Molekulargewicht bezieht sich auf das Viskositätsmittel Mᵥ, berechnet aus dem viskosimetrisch bestimmten Staudinger-Index J₀ gemäß J₀ = 3,06 x 10⁻² x (Mᵥ)^{0,65}.

Das Gewichtsverhältnis von Wachs zu Isobuten-Polymeren liegt vorzugsweise im Bereich von 5:1 bis 1:2 und insbesondere im Bereich von 4:1 bis 1:1,5.

Als Wachsbestandteil kommen grundsätzlich alle Wachstypen in Betracht, die üblicherweise in Wachsformulierungen eingesetzt werden. Im Unterschied zu den hochmolekularen Isobuten-Polymeren schmelzen Wachse definitionsgemäß unzersetzt bei Temperaturen oberhalb 40 °C, beispielsweise im Bereich von 50 bis 120 °C. Geeignete Wachstypen umfassen fossile Wachse wie Petroleumwachse, z.B. Ozokerit, makrokristalline Paraffinwachse, mikrokristalline Paraffinwachse, Montanwachse und chemisch modifizierte Montanwachse wie Montansäurewachse und Montanesterwachse, pflanzliche Wachse wie Carnauba-Wachs, Candelilla-Wachs und dergleichen, Wachse tierischen Ursprungs wie Bienenwachs, Lanolin und dergleichen, weiterhin teilsynthetische Wachse wie Amidwachse, z.B. Disteaorylethylendiamin, sowie vollsynthetische Wachse wie Polyolefinwachse, z.B. Polyethylen- und Polypropylenwachse, Fischer-Tropsch-Wachse, fluorhaltige Wachse wie Polytetrafluorethylen und Polyethylen-Polytetrafluorethylen-Copolymere sowie Polyoxidate von Fischer-Tropsch- und von Polyolefinwachsen. Im Unterschied zu den hochmolekularen Isobuten-Polymeren liegt das Molekulargewicht der Wachse (Gewichtemittel) in der Regel unterhalb 20000 Dalton. Die vorgenannten Wachstypen sind dem Fachmann hinlänglich bekannt und kommerziell erhältlich. Eine Übersicht über Wachse geben U. Wolfmayer et al. in "Wachse", Ullmanns Encyclopedia of Industrial Chemistry, 5. Ed. on CD ROM,© 1997 Wiley-VCH, Weinheim.

In bevorzugten Ausführungsformen der Erfindung werden als Wachse Montanwachse, insbesondere Montansäure- und Montanesterwachse, mikro(kristalline) Wachse, Amidwachse und deren Mischungen sowie Mischungen der vorgenannten Wachse mit Polytetrafluorethylenwachsen und Ethylen-Polytetrafluorethylenwachsen eingesetzt.

In einer Ausführungsform werden die Wachse in mikronisierter Form eingesetzt, das heißt die maximale Teilchengröße welche 90% der Wachspartikel aufweisen, weist einen Wert unterhalb 20 µm auf.

In einer Ausführungsform der Erfindung setzt man als Wachskomponente a) harte Wachse ein, das heißt Wachse, deren Nadelhärte (0,1 mm, DIN 51579) einen Wert von 50 nicht überschreitet.

Vorzugsweise enthalten die erfindungsgemäßen Formulierungen neben den Bestandteilen a) und b) wenigstens ein Silikonöl oder eine Mischung mehrerer, voneinander verschiedener Silikonöle. Als Silikonöle kommen die üblichen Oligo(dialkyl)siloxane wie Polydimethylsiloxan und Polyalkylhydrogensiloxane wie Polymethylhydrogensiloxan in Betracht. Diese Silikonöle können an ihren Termini oder als Seitenketten die folgenden Gruppen G aufweisen: Wasserstoff, Hydroxylgruppen, C₁-C₂₀-Alkylgruppen, C₁-C₂₀-Alkoxygruppen, Hydroxy-C₂-C₄-alkylgruppen, Carboxy-C₁-C₂₀-alkylgruppen, Amino-C₁-C₂₀-alkylgruppen, Glycidylgruppen, Isocyanato-C₁-C₂₀-alkylgruppen, Aminogruppen, N-(Amino-C₁-C₄-alkyl)amino-C₁-C₂₀-alkylgruppen, Methylpolyoxyethylenalkylgruppen, Hydroxypolyoxyethylenalkylgruppen, Methylpolyoxyethylenpolyoxypropylengruppen, Hydroxypolyoxyethylengruppen, Polyoxyethylengruppen, Phenylgruppen oder perfluorierte C₁-C₂₀-Alkylgruppen. Beispiele für bevorzugte Gruppen G sind neben Wasserstoff, C₁-C₄-Alkyl wie Methyl oder Ethyl, OH, Aminoalkyl wie (CH₂)₁₋₁₀NH₂, Methylpolyoxyethylenalkylgruppen wie (CH₂)₃-(OCH₂CH₂)₁₋₁₀-OCH₃, Hydroxypolyoxyethylenalkylgruppen wie (CH₂)₃-(OCH₂CH₂)₁₋₁₀-OH, Aminogruppen wie NH₂ und N(CH₃)₂.

Polydimethylsiloxane sind in der Regel überwiegend aus Wiederholungseinheiten der allgemeinen Formel (a), Polymethylhydrogensiloxane überwiegend aus Wiederholungseinheiten der Formel (b) aufgebaut:

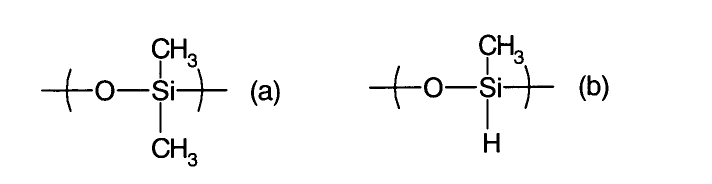

Sie weisen gegebenenfalls ein oder mehrere Gruppen der Formel c: 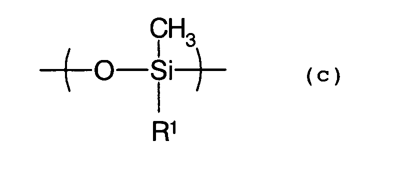 und Endgruppen der Formeln d und/oder e auf:

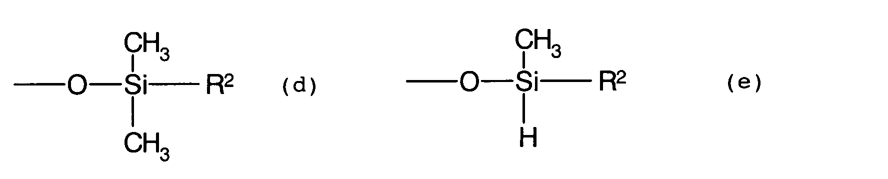

Hierin steht R¹ für eine der zuvor genannten, von Wasserstoff und Methyl verschiedenen Gruppen G. R² hat die für G angegebenen Bedeutungen.

Bei den Silikonölen unterscheidet man zwischen unfunktionalisierten Silikonölen, amino-funktionalisierten Silikonölen und sonstigen reaktiven Silikonölen. Unfunktionalisierte Silikonöle umfassen Polydimethylsiloxane und Polymethylhydrogensiloxane deren Gruppen G, sofern vorhanden, unter Wasserstoff, C₁-C₂₀-Alkyl, Phenyl und perfluoriertem Alkyl ausgewählt sind. Aminofunktionalisierte Silikonöle weisen üblicherweise als Gruppen G Aminogruppen, N-(amino-G₁-cyalkyl)amino-C₁-C₂₀-alkyl und/oder Amino-C₁-C₂₀-alkylgruppen auf. Sonstige reaktive Silikonöle weisen funktionelle Gruppen G auf, die beim Trocknen der auf eine Oberfläche aufgebrachten Formulierung eine Vernetzungsreaktion eingehen können. Hierzu zählen OH-Gruppen, Alkoxygruppen, die bekanntermaßen zu Silanol-gruppen hydrolysieren Hydroxy-C₂-C₄-alkylgruppen, Glycidylgruppen, Isocyanato-C₁-C₂₀-alkylgruppen und dergleichen.

Die Viskosität der Silikonöle liegt üblicherweise im Bereich von 10 bis 20000 mm²/s, insbesondere im Bereich von 100 von 10000 mm²/s und speziell im Bereich von 100 bis 5000 mm²/s (bestimmt z. B. nach ASTM-D445). Bei der Verwendung einer Mischung mehrerer Silikonöle als Komponente c) liegt üblicherweise die Viskosität der Mischung in den vorgenannten Bereichen.

Sofern erwünscht, wird man das Silikonöl c) in einer Menge von wenigtens 0,1 Gewichtsteilen, insbesondere wenigstens 0,2 Gewichtsteilen und speziell wenigstens 0,5 Gewichtsteilen, bezogen auf ein Gewichtsteil der Gesamtmenge an Bestandteilen a) und b) einsetzen. Insbesondere liegt das Gewichtsverhältnis von Silikonöl c) zu der Gesamtmenge der Bestandteile a) und b) im Bereich von 2:1 bis 1:5 und speziell im Bereich von 1,5:1 bis 1:2.

Silikonöle sind aus dem Stand der Technik hinlänglich bekannt (Übersicht von H. Moretto et al. "Silicones" in Ullmanns Encyclopedia of Industrial Chemistry, Fifth Ed. on CD ROM,© 1997 Wiley-VCH, Weinheim, Kapitel 3) und kommerziell erhältlich, beispielsweise von den Firmen Rhodia, Geleste ABCR, Wacker, General Electric und Dow Corning.

In einer ersten bevorzugten Ausfürhungsform verwendet man als Silikonbestandteile c) eine Mischung aus wenigstens einem Silikonöl mit geringer Viskosität, beispielsweise im Bereich von 10 bis 1000 und insbesondere im Bereich von 50 bis 500 mm²/s und einem höher viskosen Silikonöl, beispielsweise mit einer Viskosität von 1000 mm²/s bis 20000 mm²/s und insbesondere im Bereich von 1000 bis 10000 mm²/s. Das Gewichtsverhältnis der beiden Silikonöle liegt dabei im Bereich von 1:10 bis 10:1 und insbesondere im Bereich von 1:5 bis 5:1.

In einer anderen bevorzugten Ausführungsform verwendet man als Bestandteil c) eine Mischung aus wenigtens einem nichtfunktionalisierten Silikonöl (G = H, Alkyl, Perfluoralkyl oder Phenyl) und einem aminofunktionalisierten Silikonöl. Das Gewichtsverhältnis von nicht funktionalisiertem Silikonöl zu aminofunktionalisiertem Silikonäl liegt dann vorzugsweise im Bereich von 10:1 bis 1:5 und insbesondere im Bereich von 5:1 bis 1:2.

Desweiteren kommen als Bestandteil c) auch reaktive, von aminofunktionalisierten Silikonölen verschiedene Silikonöle sowie deren Mischungen mit unfunktionalisierten und/oder aminofunktionalisierten Silikonölen in Betracht, z. B. Mischungen umfassend aminofunktionisierte Silikonöle mit Silikonölen, die eine Oxirangruppe und/oder eine Isocyanat- und/oder Carboxylat-Gruppe aufweisen, Silikonöle, die Si-gebundene Alkoxygruppen oder Si-OH-Gruppen aufweisen sowie Mischungen davon mit unfunktionalisierten Silikonölen.

Des weiteren kann die erfindungsgemäße Zusammensetzung als Komponente d) ein feinteiliges Pulver enthalten, dessen Pulverteilchen eine poröse Struktur aufweisen, die durch eine BET-Oberfläche (bestimmt nach DIN 66131) von wenigstens 1 m²/g, vorzugsweise wenigstens 10 m²/g, insbesondere wenigstens 20 m²/g und speziell 50 m²/g charakterisiert ist. Üblicherweise wird die BET-Oberfläche einen Grenzwert von 1.000 m²/g und insbesondere 800 m²/g nicht überschreiten. Charakterisitisch für derartige Substanzen ist die Aggregat-Struktur der Pulverteilchen. Unter Teilchen mit Aggregatstruktur versteht man Partikel, die von einer Vielzahl sehr feinteiliger Primärteilchen mit Durchmessern im Bereich von 1 bis 500 nm, insbesondere 2 bis 100 nm und speziell 2 bis 50 nm gebildet werden. Beispiele für feinteilige Materialien mit poröser Struktur sind amorphe Metalloxide und Halbmetalloxide, insbesondere pyrogene (Halb)metalloxide wie pyrogenes Siliciumdioxid, pyrogenes Titandioxid, pyrogenes Aluminiumoxid und Fällungskieselsäure. In einer bevorzugten Ausführungsform ist die Oberfläche dieser feinteiligen, porösen Materialien hydrophob modifiziert, das heißt die Oberfläche weist eine Vielzahl von Alkylgruppen und/oder (Per)fluoralkylgruppen auf. Besonders bevorzugte Bestandteile d) sind pyrogene (Halb)metalloxide mit hydrophobierter Oberfläche, insbesondere hydrophobierte pyrogene Kieselsäure. Derartige Materialien sind dem Fachmann bestens bekannt und im Stand der Technik umfassend beschrieben, beispielsweise von O.W. Flörke et al. "Silica" in Ullmanns Encyclopedia of Industrial Chemistry, 5. Ed. on CD ROM,© 1997 Wiley-VCH, Weinheim. Sofern erwünscht, verwendet man den Bestandteil d) in einer Menge von 1 bis 100 Gew.-%, insbesondere 5 bis 50 Gew.-% bezogen auf die Gesamtmenge der Bestandteile a) und b).

Eine bevorzugte Ausgestaltung der erfindungsgemäßen Zusammensetzung sind Poliermittelzusammensetzungen. Diese enthalten neben den Bestandteilen a) bis d) ein feinteiliges, vorzugsweise oxidisches Poliermittel bzw. Schleifmittel (Bestandteil e). Geeignete Polier- bzw. Schleifmittel, häufig auch als Abrasive bezeichnet, sind aus dem Stand der Technik bekannt. Sie dienen in erster Linie der Entfernung von Schmutz und Ablagerungen auf der zu pflegenden Oberfläche , die sich nicht durch einfaches Abwaschen entfernen lassen. Geeignete Polier- bzw. Schleifmittel umfassen Aluminiumsilikate wie Kaolin, Bimsstein, Bentonit, Kieselerden z. B. Diatomeenerde, kolloidale Kieselsäure, Erdalkalisilikate wie Magnesiumsilikat und Kalziumsilikat und dergleichen. Der Anteil an Abrasivbestandteilen e) in den erfindungsgemäßen Zusammensetzungen liegt, sofern erwünscht, vorzugsweise im Bereich von 1 bis 200 Gew.-% und insbesondere im Bereich von 10 bis 100 Gew.-%, bezogen auf das Gesamtgewicht der Bestandteile a) + b). Die Art des Abrasivs richtet in an sich bekannter Weise nach der Art der zu konservierenden/pflegenden Oberfläche, wobei man üblicherweise bei glänzenden Oberflächen, z. B. lackierten Oberflächen mit einem "clear-coat" ein milderes Abrasiv oder eine Mischung verschiedener Abrasive mit einem Abrasiv-Index ≤ 1,05 wählt.

Neben den vorgenannten Bestandteilen kann die erfindungsgemäße Formulierung auch ein oder mehrere organische Lösungsmittel, Paraffinöle (Bestandteil f) und/oder Wasser enthalten. Unter den organischen Lösungsmitteln sind solche bevorzugt, welche die Wachskomponente a) und die Isobuten-Polymer-Komponente b) lösen. Beispiele für geeignete Lösungsmittel sind Ketone wie Aceton und Ethylmethylketon, aliphatische und cycloaliphatische Kohlenwasserstoffe und deren Mischungen, beispielsweise Benzinfraktionen, aromatische Kohlenwasserstoffe wie Toluol, Niederalkylester aliphatischer Carbonsäuren wie Ethylacetat und n-Butylacetat, Ether wie Diethylether, tert.-Butylmethylether und Tetrahydrofuran und dergleichen.

Die erfindungsgemäßen Zusammensetzungen können in flüssiger Form, als halbfeste Pasten und Cremes, als Sprays und als Schäume formuliert werden. Diese Formulierungen können auf Lösungen sowie auf Dispersionen der Bestandteile a) bis e) in organischen Lösungsmitteln sowie auf wässrigen Systernen wie Wasser-in-Öl und Öl-in-Wasser Emulsionen basieren. Die Zusammensetzungen können dementsprechend neben den vorgenannten Bestandteilen a) bis e), dem Lösungsmittelbestandteil f) und gegebenenfalls Wasser (Bestandteil g) noch für den jeweiligen Formulierungstyp übliche Zusätze enthalten. Beispiele für Zusätze sind insbesondere oberflächenaktive Substanzen wie Emulgatoren und Dispergierhilfsmittel, Farbstoffe, Konservierungsmittel, Verdicker, Stabilisatoren und dergleichen.

Eine bevorzugte Ausführungsform der Erfindung betrifft wässrige Formulierungen, insbesondere in Form einer Öl-in-Wasser-Emulsion oder Wasser-in-Öl-Emulsion der in Wasser unlöslichen Bestandteile a) bis e). Derartige Zusammensetzungen enthalten häufig noch wenigstens ein mit Wasser nicht mischbares organisches Lösungsmittel und/oder wenigstens ein Paraffinöl als weiteren Bestandteil (Bestandteil f). Beispiele für mit Wasser nicht mischbare organische Lösungsmittel sind insbesondere die vorgenannten aliphatischen und cycloaliphatischen Kohlenwasserstoffe, aromatische Kohlenwasserstoffe und deren Mischungen. Die Menge an Bestandteil f) beträgt üblicherweise 1 bis 60 Gew.-%, insbesondere 10 bis 60 Gew.-%, bezogen auf das Gesamtgewicht der Zusammensetzung.

Zur Stabilisierung der Ölphase und der wässrigen Phase enthalten die wässrigen Formulierungen häufig noch die hierfür üblichen oberflächenaktiven Substanzen. Beispiele für geeignete oberflächenaktive Substanzen sind die Salze von Fettsäuren, insbesondere C₁₁-C₂₂-Fettsäuren wie Stearinsäure und Ölsäure, insbesondere deren Ammoniumsalze und deren Salze mir primären, sekundären oder tertiären Aminen, wobei die Fettsäuresalze in-situ aus Fettsäure und Base, z.B. Amin hergestellt weden können, weiterhin neutrale oberflächenaktive Substanzen wie die Ethoxylierungsprodukte langkettiger Alkohole, z.B. die Ethoxylierungsprodukte von C₈-C₃₀-Alkanolen mit einem Ethoxylierungsgrad von 5 bis 100, insbesondere von 10 bis 50, Fettsäureester von gegebenenfalls ethoxilierten Polyolen wie Glycerin oder Sorbitan, beipsielsweise Sorbitanmonostearat und Sorbitanmonopalmitat sowie ethoxiliertes Sorbitanmonostearat und ethoxiliertes Sorbitanmonopalmitat mit Ethoxilierungsgraden im Bereich von 2 bis 100. Die Menge an oberflächenaktiven Substanzen liegen in der Regel im Bereich von 0,5 bis 20 Gew.-% und insbesondere 1 bis 10 Gew.-%, bezogen auf die Gesamtmenge der Bestandteile a) bis f).

Eine erfindungsgemäße wässrige Formulierung enthält beispielsweise
a) 0,2 bis 10 Gew.-% insbesondere 0,5 bis 6 Gew.-% Wachsbestandteile;
b) 0,2 bis 10 Gew.-%, insbesondere 1 bis 5 Gew.-% wenigstens eines hochmolekularen Isobuten-Polymeren;
c) 0,5 bis 20 Gew.-%, insbesondere 1 bis 12 Gew.-% wenigstens eines Silikonöls;
d) 0 bis 5 Gew.-%, beispielsweise 1 bis 5 Gew.-% eines oder mehrerer feinteiliger, oxidischer Materialien mit einer porösen Struktur, die durch eine BET-Oberfläche von wenigstens 1 m²/g charakterisiert ist;
e) 0 bis 15 Gew.-%, beispielsweise 1 bis 15 Gew.-% eines oder mehrerer feinteiliger üblicher Polier- bzw. Schleifmittel;
f) 5 bis 60 Gew.-% insbesondere 10 bis 60 Gew.-% einer oder mehrerer, mit Wasser nicht mischbarer organischer Lösungsmittel und/oder Paraffinöle; und
g) 10 bis 93 Gew.-%, insbesondere 20 bis 80 Gew.-% Wasser, jeweils bezogen auf das Gesamtgewicht der Komponenten a) bis g).

Die Applikation der erfindungsgemäßen Formulierungen auf den zu konservierenden bzw. zu pflegenden Oberflächen erfolgt in anwendungsspezifischer Weise durch übliche Auftragsverfahren, beispielsweise durch Einreiben, Streichen, Sprühen, Tauchen und dergleichen. Beim Verdunsten der in den Formulierungen enthaltenen flüchtigen Bestandteile bildet sich ein geschlossener Wachsfilm auf der zu konservierenden Oberfläche aus. Nach dem Verfestigen des Films kann die Oberfläche in üblicher Weise poliert werden, wobei man sehr dünne, glänzende und gut haftende Wachsfilme auf der Oberfläche erhält. Diese Wachsfilme zeichnen sich durch eine besonders hohe Resistenz gegenüber Chemikalien, Umwelteinflüssen und insbesondere gegenüber wässrigen Detergenzien aus. Daher sind die erfindungsgemäßen Zusammensetzungen insbesondere zur Pflege und Konservierung von lackierten Oberflächen, insbesondere für Karosserieoberflächen geeignet.

Die folgenden Beispiele sollen die Erfindung verdeutlichen, ohne sie jedoch einzuschränken.

### Verwendete Einsatzstoffe

Handelsübliche wachshaltige Autopolitur (Nigrin Lackschutz, Kern Viktor GmbH, Wien (Österreich)
Polyisobuten 1: Molekulargewicht 4,7 x 10⁶ g/mol, Viskositätsmittel;
Polyisobuten 2: Molekulargewicht 5,9 x 10⁶ g/mol, Viskositätsmittel;

Hydrophobierte, pyrogene Kieselsäure (BET-Oberfläche: 225 m²/g nach DIN 66131 Aerosil®)
Silikonöl 1: Polydimethylsiloxan (Viskosität 1000 mm²/s)
Silikonöl 2: Aminofunktionalisiertes Silikonöl (Dow Corning Fluid 531)

Testbenzin: Siedebereich 100 bis 140 °C

Montansäurewachs: Luwax®LS, (BASF Aktiengesellschaft)

Sorbitanmonopalmitat: Span@ 80, Uniquema

Paraffinöl: Norpar 13 Fluid, Exxon Mobil Chemical;

Mikronisiertes Amidwachs: Ceridust® 3910, Clariant;

Polytetrafluorethylenwachs: Ceridust® 9205 F, Clariant; Poliermittel: Diatomeenerde (Snow Floss®, Lehmann und Voss, Hamburg).

### Beispiel 1:

500 g einer handelsüblichen wachshaltigen Autopolitur wurden mit 1,5 g des oben bezeichneten Polyisobutens 1 versetzt und auf 90 °C erwärmt. Die Mischung wurde 24 Stunden bei dieser Temperatur gerührt. Anschließend ließ man unter Rühren abkühlen.

### Beispiel 2:

Die Herstellung erfolgte analog Beispiel 1, wobei man zusätzlich 0,7 g hydrophobierte, pyrogene Kieselsäure zusetzte.

### Beispiel 3 (Vergleichsbeispiel):

2,4 Montansäurewachs, 1,0 g Ölsäure, 3,0 g Silikonöl 1, 1,0 g Silikonöl 2 und 43,5 g Testbenzin wurden unter Rühren auf 80 °C erwärmt. Hierzu gab man 0,8 g Morpholin und 44,6 g auf 80 °C erwärmtes Wasser. Man rührte die Mischung 45 Minuten intensiv und ließ dann auf Raumtemperatur abkühlen.

### Beispiel 4:

Die Herstellung erfolgte analog Beispiel 3 mit den folgenden Einsatzstoffen:
2,0 g Montansäurewachs,
1 g Ölsäure
2,0 g Silikonöl 1
1,0 g Silikonöl 2
2,0 Polyisobuten 1
43,5 g Testbenzin
0,8 g Morpholin
44,6 g Wasser.

### Beispiel 5:

Die Herstellung erfolgte analog Beispiel 3 mit den folgenden Einsatzstoffen:
1,6 g Montansäurewachs,
1 g Olein
1,5 g Silikonöl 1
1,0 g Silikonöl 2
2,0 Polyisobuten 1
0,5 g hydrophobierte, pyrogene Kieselsäure
43,5 g Testbenzin
0,8 g Morpholin
44,6 g Wasser.

### Beispiel 6 (Vergleich):

0,5 Sorbitanmonopalmitat und 3,5 g Silikonöl wurden in 15,0 g Paraffinöl eingerührt. Unter Rühren gab man hierzu 5,0 g mikronisiertes Amidwachs und 1,0 g Polytetrafluorethylenwachs. Hierzu gab man unter Rühren 75 g entmineralisiertes Wasser und rührte weitere 30 Minuten.

### Beispiel 7:

0,5 Sorbitanmonopalmitat, 3,5 g Silikonöl 1 und 2,0 Polyisobuten 2 wurden in 15,0 g Paraffinöl eingerührt. Unter Rühren gab man hierzu 4,0 g mikronisiertes Amidwachs und 1,0 g Polytetrafluorethylenwachs. Hierzu gab man unter Rühren 75 g entmineralisiertes Wasser und rührte weitere 30 Minuten.

### Beispiel 8:

0,5 Sorbitanmonopalmitat, 2,5 g Silikonöl 1, 2,0 Polyisobuten 2 und 0,9 hydrophobierte, pyrogene Kieselsäure wurden in 15,0 g Paraffinöl eingerührt. Hierzu gab man 4,0 g mikronisiertes Amidwachs und 0,8 g Polytetrafluorethylenwachs. Hierzu gab man unter Rühren 75 g entmineralisiertes Wasser und rührte weitere 30 Minuten.

### Beispiel 9 (Vergleichsbeispiel):

2,4 Montansäurewachs, 1,0 g Ölsäure, 3,0 g Silikonöl 1, 1,0 g Silikonöl 2 und 43,5 g Testbenzin wurden unter Rühren auf 80 °C erwärmt. Hierzu gab man 0,8 g Morpholin und 44,6 g auf 80 °C erwärmtes Wasser. Man rührte die Mischung 45 Minuten intensiv, gab in die heiße Emulsion 3,5 g einer handelsüblichen Poliermittels (Diatomeen-Erde kalziniert, Snow Floss®) und ließ dann auf Raumtemperatur abkühlen.

### Beispiel 10:

Die Herstellung erfolgte analog Beispiel 9 mit den folgenden Einsatzstoffen:
2,0 g Montansäurewachs,
1 g Ölsäure
2,0 g Silikonöl 1
1,0 g Silikonöl 2
2,0 Polyisobuten 1
43,5 g Testbenzin
0,8 g Morpholin
44,6 g Wasser.
2,9 g Snow Floss®

### Beispiel 11:

Die Herstellung erfolgte analog Beispiel 9 mit den folgenden Einsatzstoffen:
1,6 g Montansäurewachs,
1 g Ölsäure
1,5 g Silikonöl 1
1,0 g Silikonöl 2
2,0 Polyisobuten 1
0,5 g hydrophobierte, pyrogene Kieselsäure
43,5 g Testbenzin
2,9 g Snow Floss®
0,8 g Morpholin
44,6 g Wasser.

### Anwendungstechnische Prüfung:

Auf der linken Hälfte von 2 dunkelblau lackierten PKWs (VW Polo) wurden die Wachsfomrmulierungen der Referenzbeispiele bzw. die handelsübliche Politur appliziert, auf der rechten Seite des gleichen Autos wurden die der Referenz entsprechende erfindungsgemäße Formulierung appliziert.

Hierzu wurden die Autos zunächst in einer Waschstraße gereinigt. Anschließend wurden die Formulierungen mit einem weichen Tuch dünn auf den Lack aufgetragen. Nach dem Trocknen (ca. 60 Minuten) wurde überschüssige Formulierung mit Autopolierwatte entfernt und anschließend der Lack glänzend poliert.

Anschließend wurden die Autos in üblicher Weise genutzt und einmal pro Woche in einer Autowaschstraße gereinigt. Nach jeder Autowäsche wurde die Hydrophobie der Lackierung beurteilt. Hierzu wurden 5 Liter Wasser über dem PKW ausgegossen und visuell das Ablaufverhalten nach einer Notenskala von 1 bis 4 begutachtet:
4 = sehr gutes Abperlen und Ablaufen des Wassers, keine Wasserrückstände,
3 = gutes Abperlen und Ablaufen des Wassers, geringe Wasserrückstände auf Dach und Motorhaube,
2 = schwaches Abperlen und langsames Ablaufen des Wassers, Wasserrückstände auf Dach, Motorhaube und Kotflügeln,
1 = Ablaufen des Wassers wie auf einem unbehandelten Auto.

Die Ergebnisse sind in der folgenden Tabelle dargestellt:

**Tabelle 1**

| | Abperlverhalten des Wassers | | | |
|---|---|---|---|---|
| | 4 Wochen | 8 Wochen | 16 Wochen | 32 Wochen |
| Handelüblicher Lackschutz | 4 | 4 | 3 | 1 |
| Beispiel 1 | 4 | 4 | 4 | 3 |
| Beispiel 2 | 4 | 4 | 4 | 4 |
| | | | | |
| Beispiel 3 (Referenz) | 4 | 3 | 2 | 1 |
| Beispiel 4 | 4 | 4 | 4 | 3 |
| Beispiel 5 | 4 | 4 | 4 | 4 |
| | | | | |
| Beispiel 6 (Referenz) | 4 | 3 | 1 | 1 |
| Beispiel 7 | 4 | 4 | 4 | 1 |
| Beispiel 8 | 4 | 4 | 4 | 3 |
| | | | | |
| Beispiel 9 (Referenz) | 4 | 3 | 2 | 1 |
| Beispiel 10 | 4 | 4 | 4 | 3 |
| Beispiel 11 | 4 | 4 | 4 | 4 |

## Patentansprüche

1. Wachsformulierung, enthaltend neben wenigstens einem Wachs als Bestandteil a) wenigstens ein hochmolekulares Isobuten-Polymer als Bestandteil b) in einer Menge von 0,1 bis 5 Gewichtsteilen, bezogen auf 1 Gewichtsteil des Bestandteils a).

2. Formulierung nach Anspruch 1, worin das hochmolekulare Isobuten-Polymer ein Homopolymer des Isobutens mit einer Molmasse (Gewichtsmittel) von wenigstens 500000 ist.

3. Formulierung nach Anspruch 1 oder 2, enthaltend zusätzlich ein Silikonöl als Bestandteil c).

4. Formulierungen nach Anspruch 3, worin das Gewichtsverhältnis von Silikonöl zu der Gesamtmenge der Bestandteile a) und b) im Bereich von 5:1 bis 1:10 liegt.

5. Formulierung nach einem der Ansprüche 3 oder 4, worin das Silikonöl eine Viskosität im Bereich von 10 bis 20000 mm²/s (bei 25 °C) aufweist.

6. Formulierung nach einem der vorhergehenden Ansprüche, die zusätzlich wenigstens ein feinteiliges, oxidisches Material (Bestandteil d) mit einer porösen Struktur, die durch eine BET-Oberfläche von wenigstens 1 m²/g charakterisiert ist, enthält.

7. Formulierung nach Anspruch 6, enthaltend den Bestandteil d) in einer Menge von 1 bis 50 Gew.-%, bezogen auf die Gesamtmenge der Bestandteile a) und b).

8. Formulierung nach einem der vorhergehenden Ansprüche in Form einer Poliermittelformulierung enthaltend wenigstens einen Abrasivbestandteil e).

9. Formulierung nach einem der vorhergehenden Ansprüche in Form einer Öl/Wasser-Emulsion.

10. Formulierung nach Anspruch 9, enthaltend zusätzlich ein mit Wasser nicht mischbares organisches Lösungsmittel und/oder Paraffinöl als Bestandteil f).

11. Formulierung nach Anspruch 9 oder 10, enthaltend
a) 0,2 bis 10 Gew.-% Wachs;
b) 0,2 bis 10 Gew.-% wenigstens eines hochmolekularen Isobuten-Polymeren
c) 0,5 bis 20 Gew.-% wenigstens eines Silikonöls
d) 0 bis 5 Gew.-% eines oder mehrerer feinteiliger, oxidisches Materialien mit einer porösen Struktur, die durch eine BET-Oberfläche von wenigstens 1 m²/g charakterisiert ist,
e) 0 bis 15 Gew.-% eines oder mehrerer feinteiliger Polier- bzw. Schleifmittel, und
f) 5 bis 60 Gew.-% eines oder mehrerer, mit Wasser nicht mischbarer organischer Lösungsmittel oder Paraffinöle und
g) 10 bis 93 Gew.-% Wasser, jeweils bezogen auf das Gesamtgewicht der Bestandteile a) bis g).

12. Verwendung von Formulierungen nach einem der vorhergehenden Ansprüche zur Pflege und Konservierung von glatten Oberflächen, insbesondere von lackierten Oberflächen.
